# FASCICULE DE BREVET EUROPEEN

(11) **EP 0 699 310 B1**
(45) Date de publication et mention de la délivrance du brevet: **12.06.2002**
(21) Numéro de dépôt: 95912282.1
(22) Date de dépôt: 03.03.1995
(51) Int. Cl.: G02B 5/18, B42D 15/10, G02B 5/32

(54) **PROCEDE POUR REALISER UNE IMAGE OPTIQUEMENT VARIABLE**
VERFAHREN ZUR HERSTELLUNG EINES OPTISCH VARIABLEN BILDES
METHOD FOR THE PRODUCTION OF AN OPTICALLY VARIABLE IMAGE

(30) Priorité: 03.03.1994 FR 9402453
(43) Date de publication de la demande: 06.03.1996
(73) Titulaire: HOLOGRAM INDUSTRIES S.A., F-94120 Fontenay-Sous-Bois (FR)
(72) Inventeur: SOUPARIS, Hugues, F-94130 Nogent-sur-Marne (FR); DANIEL, Françoise, F-75012 Paris (FR)
(74) Mandataire: Pernez, Helga
(86) Numéro de dépôt international: FR9500255
(87) Numéro de publication internationale: WO9523986

(56) Documents cités:
- EP-A- 0 105 099
- EP-A- 0 240 261
- EP-A- 0 247 471
- EP-A- 0 251 815
- WO-A-82/01595
- WO-A-82/04327
- US-A- 4 364 627

## Description

La présente invention concerne un procédé pour réaliser une image optiquement variable servant de modèle pour la reproduction d'un élément de sécurité sur un document, par insolation d'un substrat photosensible à l'aide de deux faisceaux lumineux cohérents.

On appelle "image optiquement variable", une image telle que les impressions rétiniennes d'un observateur varient lorsque, l'observateur étant immobile et la source lumineuse étant fixe, le document supportant l'élément de sécurité pivote autour d'un axe vertical ou d'un axe de référence fixe par rapport au document.

Dans le domaine de la sécurité, les effets les plus intéressants sont ceux qui sont liés à la variabilité optique des réseaux. Cette variabilité s'exprime soit par la variation des couleurs soit par l'apparition et la disparition d'éléments juxtaposés qui conduisent à des effets d'animation d'images que l'on obtient en jouant sur la directivité de la lumière diffractive soit en faisant pivoter le document autour d'un axe géométrique vertical, soit en le basculant autour d'un axe repère du document.

Les variations possibles de l'image perçue par l'observateur comprennent :
- des changements de couleur, la gamme de couleurs comprenant les couleurs pures, les couleurs composées, le rendu des vraies couleurs et l'achromatique;
- des apparitions fugitives, intermittentes, ou constantes de certains éléments de l'image qui permettent par exemple de créer un effet d'animation d'une ou de plusieurs parties de l'image.

Les éléments de sécurité optique sont utilisés sur des documents, tels que les cartes bancaires, les cartes de crédit, les papiers d'identité ou les documents ayant une valeur fiduciaire afin de les rendre infalsifiables.

Historiquement, le premier élément optique utilisé a été l'hologramme, fruit d'une technique qui permet la reproduction d'images en relief et de couleurs réelles. Cependant, c'est une technique très répandue et donc peu adaptée aux documents sécuritaires.

Le stéréogramme, est l'image holographique tridimensionnelle la plus complexe à élaborer. C'est une protection sécuritaire de haut niveau qui permet l'enregistrement d'objets, de personnages, de scènes en relief ou d'images de synthèse à trois dimensions. Toutefois, sous un éclairage ordinaire, le rendu des images holographiques tridimensionnelles ne permet pas une parfaite vérification de l'image.

L'authentification des documents de haute sécurité perd donc dans certains cas de sa fidélité.

EP-A-0 467 601 décrit un procédé pour réaliser un hologramme par insolation d'un substrat. L'insolation du substrat selon le procédé décrit dans ce document est réalisé point par point par focalisation des deux faisceaux lumineux et on déplace le substrat pas à pas en abscisse et en ordonnée. La taille du point à insoler est limitée par un cache comportant une ouverture ponctuelle. La précision de l'image réalisée est fonction de la taille des pixels et de la précision des déplacements pas à pas en abscisse et en ordonnée. La disposition angulaire des faisceaux doit être synchronisé avec le déplacement du substrat.

Ce procédé ne permet pas d'obtenir avec une grande précision des images comportant des lignes fines dans lesquelles on désire que chaque ligne soit totalement visible ou invisible par intermittence par un observateur regardant cette image.

EP-A-0 105 099, décrit un autre procédé de fabrication de l'image, dans lequel on utilise une série de trois diaphragmes dont on peut faire varier les positions relatives, deux de ces diaphragmes permettant de générer deux sources ponctuelles en masquant une source plus large. Les deux sources ponctuelles sont cohérentes entre elles et permettent d'éclairer l'ensemble de la surface sensible sur laquelle doit être réalisée l'image optiquement variable. Le troisième diaphragme permet d'isoler un petit élément de la surface sensible. Le déplacement des deux premiers diaphragmes, l'un par rapport à l'autre et par rotation autour d'un axe perpendiculaire au substrat à insoler permet de définir la structure interférentielle du réseau, c'est-à-dire la fréquence spatiale et l'orientation angulaire des stries de ce réseau. Le déplacement du troisième diaphragme permet d'inscrire le réseau à l'endroit voulu sur le substrat. Ce procédé nécessite un synchronisme entre les dispositifs de déplacement des deux premiers diaphragmes et le dispositif de déplacement du troisième diaphragme. De plus, la finesse de l'image est fonction de la taille de l'ouverture du troisième écran. Ce procédé présente les mêmes inconvénients que ceux mentionnés pour EP-A-0 467 601.

Dans les deux documents cités ci-dessus, l'enregistrement du réseau sur chaque pixel se fait à partir de deux sources ponctuelles. Ces procédés conduisent à une image fugitive lorsque l'observateur bascule le document.

Quelle que soit la technique utilisée, la définition de l'image résultante est limitée, soit par la taille des pixels, soit par la taille des taches lumineuses lorsque celles-ci sont générées par des fibres, soit par la finesse mécanique du système utilisé pour la réalisation des pixels, soit par la taille du diaphragme de blocage.

De plus, ces techniques ne permettent pas la réalisation d'images de grand format qui couvrent la totalité du document à sécuriser.

WO-A-82 01595 concerne un procédé pour réaliser des effets colorés et texturés sur une surface, en utilisant des masques présentant des fentes de très grande largeur ou des fenêtres de grandes dimensions. Ce procédé ne permet pas d'obtenir des images optiquement variables comportant une animation.

Le but de la présente invention est de proposer un procédé pour réaliser une image optiquement variable par insolation d'un substrat qui permette la maîtrise du moment et de la durée d'apparition des éléments d'une image fugitive et la maîtrise de la bande passante chromatique, lorsque l'on observe l'image en faisant pivoter son support par rapport à un axe repère du document qui assure un contrôle précis de la taille des points, des lignes et des surfaces formant l'image quelle que soit la complexité des réseaux à inscrire sur le substrat, et qui soit d'une mise en oeuvre facile.

Ceci est réalisé par le procédé défini dans la revendication 1. La revendication 10 concerne un procédé réalisant une alternative du procédé de la revendication 1.

La revendication 11 définit un élément pouvant être obtenu par les procédés définis dans les revendications 1 et 10. Les revendications dépendantes définissent d'autres modes de réalisation.

D'autres avantages et caractéristiques de l'invention ressortiront à la lecture de la description suivante faite à titre d'exemple et en référence aux dessins annexés dans lesquels :
- La figure 1 présente un document muni d'un élément de sécurité de forme rectangulaire et disposé au centre du document.
- La figure 2 présente, à titre d'exemple, un élément de sécurité qui comporte une image en vraies couleurs ou couleurs naturelles, des aplats, des lignes animées et des micro-lettrages.
- Les figures 3A à 3C représentent les trois masques nécessaires pour réaliser l'image en vraie couleur de la figure 2, la figure 3A correspondant au masque pour la couleur rouge, la figure 3B au masque pour la couleur verte et la figure 3C au masque pour la couleur bleue.
- La figure 4 représente le masque pour réaliser les micro-lettrages de la figure 2.
- La figure 5 représente le masque pour réaliser un aplat de couleur de la figure 2.
- Les figures 6A à 6H représentent les masques pour réaliser les lignes animées.
- La figure 7 montre schématiquement le dispositif utilisé pour mettre en oeuvre le procédé et
- la figure 8 montre un système optique du dispositif de la figure 7.

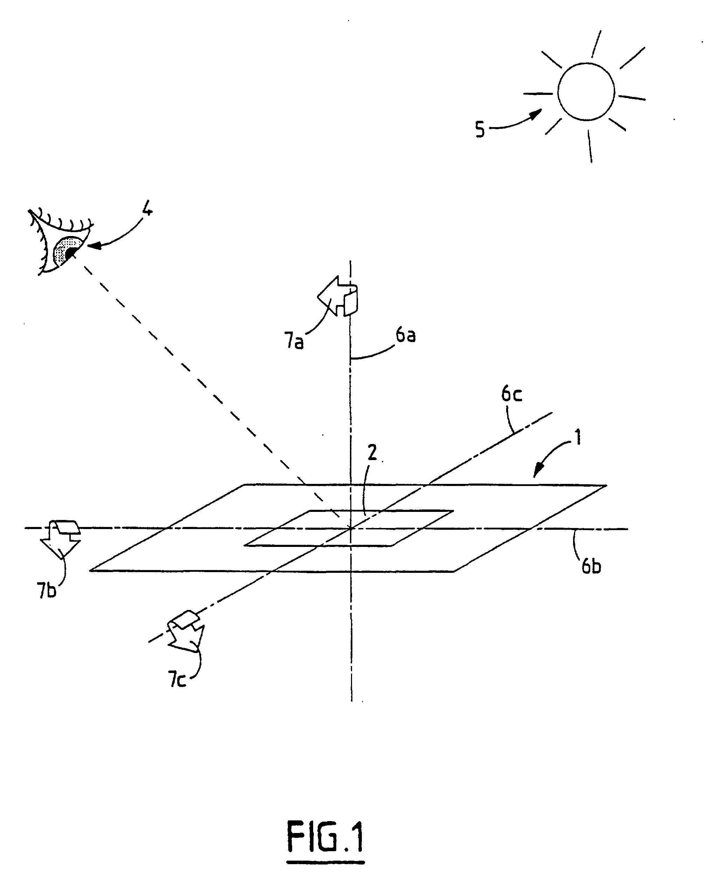

La figure 1 montre un document 1 sur lequel est apposé un élément de sécurité 2 qui comporte une image optiquement variable, c'est-à-dire que l'oeil 4 d'un observateur qui regarde l'élément de sécurité 2 éclairé par une source lumineuse 5 fixe perçoit une image dont les couleurs ou les formes varient lorsqu'on fait tourner le document autour d'un axe 6a perpendiculaire à la surface de l'élément de sécurité 2, ou lorsqu'on bascule le document autour de l'un des axes repères, haut-bas 6b ou droite-gauche 6c, appartenant au plan du document 1. Les mouvements imprimés au document 1 sont représentés respectivement par les flèches 7a, 7b, 7c. Le basculement du document 1 autour de l'axe 6b permet de faire varier globalement les couleurs des différents éléments de l'image. Le basculement du document 1 autour de l'axe 6c permet de faire apparaître ou disparaître de façon fugitive ou prolongée les divers éléments de l'image. On peut ainsi faire évoluer une image (effet d'animation).

L'élément de sécurité 2 peut être obtenu par exemple par matriçage d'un film en polyester recouvert sur sa face visible d'une couche d'un matériau réfractant la lumière reçue, au moyen d'un poinçon rigide dont l'empreinte est complémentaire de l'empreinte d'un modèle obtenu par insolation d'un substrat photosensible 8. Le but de la présente invention est de proposer un procédé pour réaliser une image optiquement variable sur le substrat 8.

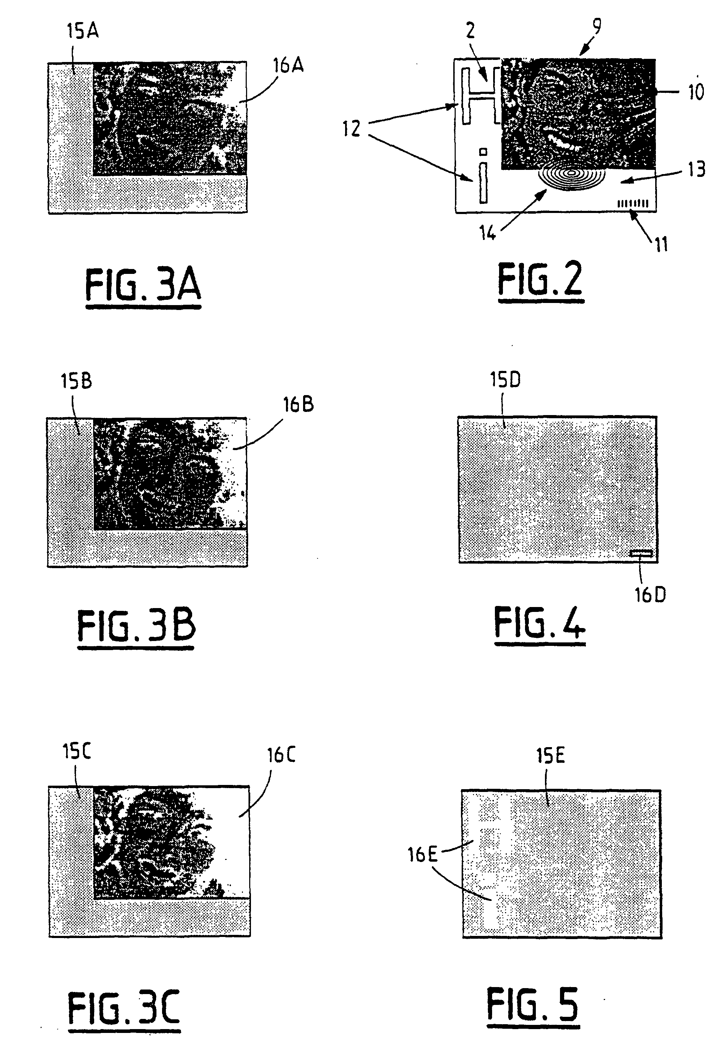

La figure 2 montre un exemple d'une image souhaitée 9 sur l'élément de sécurité 2.

Cette image 9 comporte une photographie 10 en couleurs naturelles, une zone 11 sur laquelle figurent des micro-lettrages, des aplats 12 de couleur monochromatique représentant les lettres H I, et une zone 13 comportant une pluralité de lignes ovalisées 14 concentriques. Lorsque la lumière est émise par une source 5 quasi ponctuelle, ces lignes ovalisées 14 ne sont pas toutes visibles en même temps par l'observateur. Lorsque l'observateur bascule ou tourne le document 1, ces lignes 14 sont visibles successivement, ce qui donne une impression d'animation de l'image, le diamètre de l'ovale perçu croissant ou diminuant de façon continue.

Pour réaliser l'image 9 représentée sur la figure 2, on décompose cette image en une pluralité d'images élémentaires correspondant chacune à un effet optique déterminé, et on réalise autant de caches 15 qu'il y a d'effets optiques. Chaque cache ne comporte qu'une partie de l'image totale. Chaque cache 15 comporte au moins une fenêtre 16 qui correspond à la zone à insoler qui doit satisfaire à l'effet optique désiré. La photographie 10 est analysée point par point en fonction des trois couleurs fondamentales rouge, vert, bleu, et on réalise un cache 15 pour chacune des couleurs fondamentales.

Les caches 15A, 15B, 15C montrés sur les figures 3A, 3B, 3C comportent respectivement les fenêtres 16A, 16B, 16C nécessaires pour reproduire les trois couleurs fondamentales rouge, vert, bleu de la photographie 10.

Le cache 15D montré sur la figure 4 comporte également une pluralité de petites fenêtres 16D qui représentent les micro-lettrages de la zone 11.

Le cache 15E de la figure 5 comporte deux fenêtres 16E qui ont respectivement la forme des lettres H et I des aplats 12 représentés sur la figure 2.

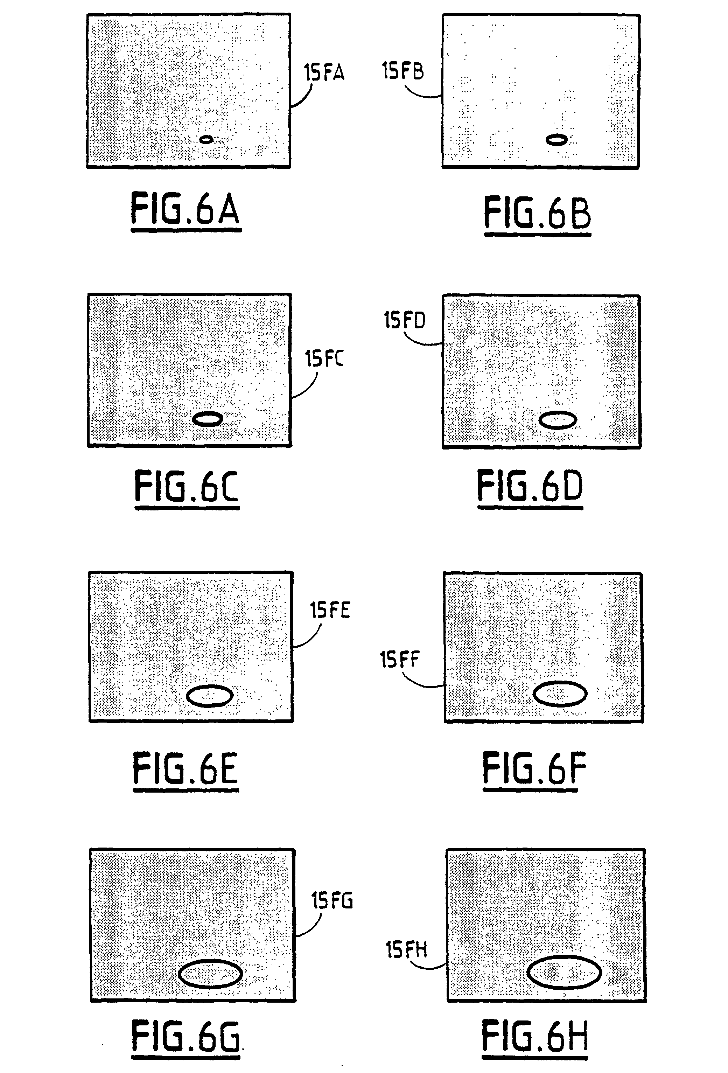

Les figures 6A et 6F montrent chacune un cache 15 comportant une fenêtre 16 ayant la forme d'une ligne ovalisée. La taille de l'ovale va croissant, de manière continue, depuis le masque 15FA montré sur la figure 6A jusqu'au masque 15FH montré sur la figure 6H.

Sur les figures 3A à 6H, les zones des caches opaques à la lumière sont représentées en gris. Sur les figures 6A à 6H les zones qui laissent passer la lumière sont figurées en traits forts.

Les fenêtres 16 peuvent être en nombre quelconque sur chaque masque 15. De plus, chaque fenêtre 16 peut avoir une taille très petite ou une surface très grande, ainsi qu'une forme quelconque.

Ce qui compte, c'est que les fenêtres 16 d'un masque donné 15 correspondent à une image élémentaire ayant un effet optique déterminé. Ceci veut dire qu'un observateur regardant le document 1 en le basculant, verra l'image élémentaire correspondant à ce cache sous un angle d'observation donné, avec une couleur déterminée, et pendant une durée déterminée. Pour obtenir un effet d'animation, on réalise plusieurs caches 15 sur lesquels les fenêtres 16 évoluent, de manière continue, en taille, translation ou rotation, les effets optiques correspondant aux zones du substrat 8 découvertes par les fenêtres 16 de ces masques 15 évoluant également de manière continue, soit en fréquence spatiale, soit en orientation angulaire, soit à la fois en fréquence spatiale et en orientation angulaire. Les caches 15 représentés sur les figures 6A à 6H répondent à ce critère.

Dans l'image souhaitée 9 représentée sur la figure 2, on a superposé partiellement les zones à effet d'animation et la photographie. Mais ces différentes zones peuvent être séparées. La zone 11 des micro-lettrages peut également être disposée dans les méplats 12, la photographie 10 ou la zone 13 comportant les lignes ovalisées 14.

De même, la zone d'animation 13 peut chevaucher les aplats 12.

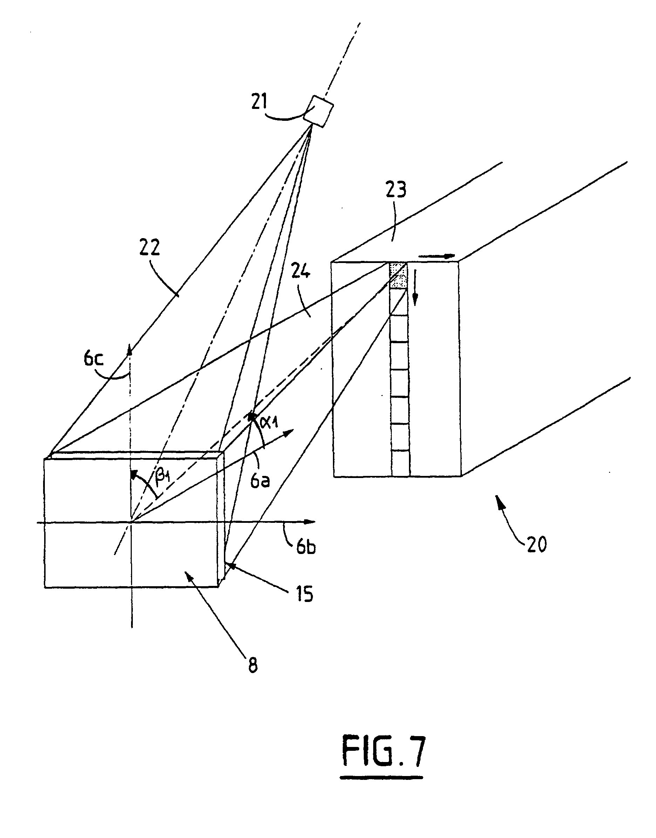

La figure 7 montre schématiquement le dispositif 20 utilisé pour impressionner le substrat 8 par insolation selon le procédé de l'invention. Ce dispositif comporte un premier système optique 21 qui émet un premier faisceau lumineux 22 ponctuel susceptible d'éclairer le totalité de la surface du substrat 8, et un deuxième système optique 23 qui émet un deuxième faisceau lumineux 24 susceptible également d'éclairer la totalité de la surface du substrat 8. Les deux faisceaux lumineux 22 et 24 sont cohérents entre eux et sont issus du même laser.

Le deuxième faisceau lumineux 24 est issu d'une surface d'éclairement de forme rectangulaire dont chaque élément éclairant éclaire la totalité de la surface du substrat 2.

Un cache 15 est disposé au-dessus du substrat 8 et dans le champs des deux faisceaux lumineux 22 et 24. Les deux faisceaux lumineux 22 et 24 interfèrent entre eux, et selon la position de chacun des deux systèmes optiques 21 et 23 par rapport au substrat 8, on obtient, dans le plan du substrat 8, un réseau interférentiel défini par une fréquence spatiale, c'est-à-dire la distance entre les stries et par une orientation angulaire.

Les caches 15 ont tous les mêmes dimensions et ces dimensions sont telles que les caches recouvrent totalement la surface du substrat 8. Au cours d'une insolation, seules les zones du substrat 8 situées en regard des fenêtres 16 du cache 15, sont impressionnées.

Selon le procédé de l'invention, on dispose successivement chacun des caches 15 réalisés ci-dessus sur le substrat 8 et on insole le substrat 8 en prenant soin de positionner correctement les systèmes optiques 21 et 23 en fonction de l'effet optique souhaité pour les zones insolées à l'aide dudit cache 15.

Pour réaliser sur le substrat 8, l'image 9 représentée sur la figure 2, on insole le substrat 8 en le masquant successivement avec les 13 masques représentés sur les figures 3A à 6H..

Pour réaliser l'animation de l'exemple précédent, et donner l'impression que les ovales grandissent ou diminuent, lorsqu'on bascule le document 1 autour de l'axe 6b, on définit une direction pour le premier faisceau lumineux 22, ce qui permet d'obtenir une couleur déterminée, et on fait varier les angles d'incidence des rayons du deuxième faisceau lumineux 24.

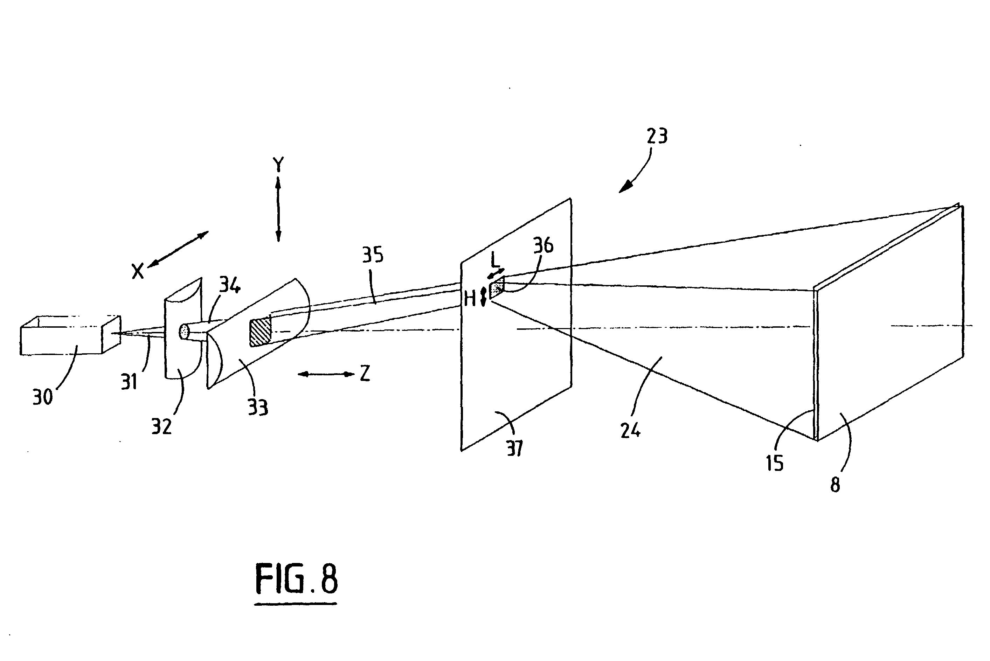

La figure 8 montre un mode de réalisation du deuxième système optique 23. Ce deuxième système optique 23 comporte un dispositif 30 disposé en aval d'un laser et qui émet un pinceau lumineux 31 divergent vers le substrat 8. Une première lentille cylindrique 32 est disposée dans le champ du pinceau lumineux 31. Une deuxième lentille cylindrique 33, perpendiculaire à la première lentille 32, est disposée dans le champ du faisceau 34 sortant de la première lentille 32. Le faisceau lumineux 35 sortant de la deuxième lentille 33 éclaire une zone rectangulaire 36 d'un élément optique holographique 37 qui émet le deuxième faisceau lumineux 24 vers le substrat 8. La position de la zone 36 éclairée, et donc les valeurs des angles d'incidence du deuxième faisceau 24, est fonction des positions transversales des lentilles cylindriques 32 et 33 dans le pinceau lumineux 31. La position de ces deux lentilles 32 et 33 est réglable transversalement, la première lentille 32 pouvant être déplacée dans le sens de la flèche X et la deuxième lentille 33 pouvant être déplacée dans le sens de la flèche Y. Le déplacement de la première lentille 32 selon l'axe X permet de déplacer la zone 36 horizontalement, ce qui détermine la position sur l'échelle chromatique, donc la couleur, tandis que le déplacement de la deuxième lentille 33 selon l'axe Y permet de déplacer la zone 36 verticalement, ce qui définit l'angle d'apparition de l'image élémentaire correspondant au cache, donc le moment d'apparition de cette image élémentaire. Ceci permet de définir l'angle d'observation de l'élément inscrit sur le substrat.

Les dimensions de la zone 36 sont également réglables, par déplacement axial des lentilles 32 et 33. Le déplacement de la première lentille 32 selon l'axe Z permet de régler la largeur L de la zone 36, ce qui détermine la bande passante chromatique. Pour moduler la gamme de couleur, il suffit d'augmenter L et de masquer ensuite les bandes spectrales inutiles. Le déplacement de la deuxième lentille 33 le long de l'axe Z permet de régler la hauteur H de la zone 36 éclairée. La hauteur H définit la durée d'apparition d'un élément d'image.

L'élément optique holographique 37 peut être remplacé par un jeu de lentilles divergentes disposées en rangs et colonnes dans un plan perpendiculaire à l'axe Z, et qui, lorsqu'elles reçoivent la lumière issue de la deuxième lentille 33, la transmettent sur l'ensemble de la surface du substrat 8. Chaque lentille correspond à une couleur déterminée et à un angle d'observation déterminé de l'image élémentaire qui sera perçue par l'observateur, et définit la durée d'apparition de cette image élémentaire lorsque l'observateur bascule le document.

## Revendications

1. Procédé pour réaliser une image (9) optiquement variable se décomposant en au moins six images élémentaires significatives, l'image (9) étant réalisée à l'aide d'un cache (15) comportant un ensemble de fenêtres définissant les zones du substrat sur lesquelles ladite image élémentaire doit être inscrite, ladite image (9) comportant une animation et servant de modèle pour la reproduction d'un élément de sécurité (2) sur un document par insolation d'un substrat photosensible (8) à l'aide de deux faisceaux lumineux cohérents (22, 24), pour former des images affectées d'un effet optique défini par une couleur et une animation, ledit procédé consistant à utiliser un premier faisceau ponctuel susceptible d'éclairer la totalité de la surface du substrat (8) et un deuxième faisceau lumineux (24) émis par une surface d'éclairement (36) ayant des dimensions réglables et un positionnement réglable par rapport audit premier faisceau (22), l'insolation du substrat (8) étant réalisée en plaçant successivement chaque cache (15) sur le substrat (8),
**caractérisé en ce que**
les surfaces d'éclairement (36) présentent une forme globalement rectangulaire, et **en ce que** la durée d'apparition de l'image est fixée par le paramètre de hauteur de la zone d'éclairement correspondant à la dimension de la surface d'éclairement mesurée dans un plan perpendiculaire au plan général défini par les deux faisceaux (22, 24) et **en ce que** la bande passante chromatique est fixée par le paramètre de largeur de la zone d'éclairement correspondant à la dimension de la surface d'éclairement mesurée dans une direction perpendiculaire à la hauteur.

2. Procédé selon la revendication 1 **caractérisé en ce que** l'on règle la position angulaire de l'ensemble constitué par le substrat (8) et le cache (15) autour d'un axe (6a) perpendiculaire audit ensemble avant l'insolation, afin que l'image élémentaire correspondante soit visible par l'observateur, lorsque le document sera tourné du même angle.

3. Procédé selon l'une quelconque des revendications 1 ou 2 **caractérisé en ce que** le premier faisceau (22) est fixe pendant les insolations successives du substrat (8) et **en ce que** l'on règle la position de la surface d'éclairement (36) avant chaque insolation.

4. Procédé selon la revendication 3 **caractérisé en ce qu'**on utilise pour générer le deuxième faisceau (24) un faisceau divergent (31) issu d'un laser, une première lentille cylindrique mobile (32) disposée dans ledit faisceau lumineux divergent (31), une deuxième lentille cylindrique (33) mobile, perpendiculaire à ladite première lentille (32) et disposée dans le faisceau (34) issu de cette dernière et un élément optique holographique (37) fixe disposé dans le faisceau (35) issu de ladite deuxième lentille (33) et dont chaque élément éclairant est susceptible d'éclairer la totalité de l'ensemble constitué par le substrat (8) et le masque (15).

5. Procédé selon l'une quelconque des revendications 1 à 4 **caractérisé en ce que** des portions de fenêtres de plusieurs caches (15) se chevauchent.

6. Procédé selon la revendication 4 **caractérisé en ce qu'**on règle la couleur de l'image élémentaire en déplaçant transversalement la première lentille (32).

7. Procédé selon la revendication 4 **caractérisé en ce qu'**on règle la couleur de l'image élémentaire en déplaçant axialement la première lentille (32).

8. Procédé selon la revendication 4 **caractérisé en ce qu'**on règle le moment de l'apparition de l'image élémentaire en déplaçant transversalement la deuxième lentille (33).

9. Procédé selon la revendication 4 **caractérisé en ce qu'**on règle le moment de l'apparition de l'image élémentaire en déplaçant axialement la deuxième lentille (33).

10. Procédé de fabrication d'un élément de sécurité pour la sécurisation d'un document, obtenu par matriçage d'un film en polyester recouvert sur sa face visible d'une couche d'un matériau réfractant la lumière reçue, au moyen d'un poinçon rigide dont l'empreinte est complémentaire du modèle obtenu par insolation d'un substrat photosensible avec une image optiquement variable formée de plusieurs images élémentaires, ladite image (9) étant formée à l'aide d'un premier faisceau ponctuel susceptible d'éclairer la totalité de la surface du substrat (8) et d'un deuxième faisceau lumineux (24) émis par une surface d'éclairement (36) ayant des dimensions réglables et un positionnement réglable par rapport audit premier faisceau (22), l'insolation du substrat (8) étant réalisée en plaçant successivement chaque cache (15) sur le substrat (8), les surfaces d'éclairement (36) présentent une forme globalement rectangulaire, et en ce que la durée d'apparition de l'image est fixée par le paramètre de hauteur de la zone d'éclairement correspondant à la dimension de la surface d'éclairement mesurée dans un plan perpendiculaire au plan général défini par les deux faisceaux (22, 24) et en ce que la bande passante chromatique est fixée par le paramètre de largeur de la zone d'éclairement correspondant à la dimension de la surface d'éclairement mesurée dans une direction perpendiculaire à la hauteur.

11. Elément de sécurité pour la sécurisation d'un document, formant une image optiquement variable par un effet d'animation, réalisé par insolation d'un substrat photosensible (8) à l'aide de deux faisceaux lumineux cohérents (22, 24), pour former des images affectées d'un effet optique défini par une couleur et une animation, ladite image optiquement variable se décomposant en au moins six images élémentaires significatives affectées d'un effet optique déterminé, ledit effet optique étant défini, pour l'observateur basculant ledit document par une couleur, une bande passante chromatique un moment d'apparition et une durée d'apparition lorsque l'observateur bascule ledit document autour d'un axe vertical ou horizontal du document, **caractérisé en ce que** les images élémentaires sont constituées par des lignes ovalisées qui ne sont pas toutes visibles en même temps par l'observateur, et qui sont visibles successivement lorsque l'observateur bascule le document afin de donner l'impression que le diamètre de l'ovale croit ou diminue de façon continue.

## Patentansprüche

1. Verfahren zur Herstellung eines optisch veränderlichen Bildes (9), das sich aus mindestens sechs prägnanten Grundbildern zusammensetzt, wobei das Bild (9) mit Hilfe einer Maske gefertigt wird (15), die mehrere Fenster zur Festlegung der Grundzonen umfasst, auf die das genannte Grundbild aufgebracht werden muss, und wobei das genannte Bild (9) eine Animation enthält und als Modell zur Reproduktion eines Sicherheitselements (2) auf einem Dokument durch Lichteinstrahlung auf eine photosensible Grundlage (8) mit Hilfe von zwei kohärenten Lichtstrahlen (22,24) dient, um Bilder herzustellen, die einen durch eine Farbe und eine Animation bewirkten optischen Effekt aufweisen, wobei das genannte Verfahren darin besteht, dass ein erster, die gesamte Fläche der Grundlage (8) erfassender Punktstrahl und ein zweiter Lichtstrahl (24) verwendet werden, der von einer Leuchtfläche (36) ausgeht, einstellbare Abmessungen aufweist und dessen Position auf den genannten ersten Strahl (22)eingestellt werden kann, wobei die Lichteinstrahlung der Grundfläche (8) in der Weise erfolgt, dass nacheinander alle Masken (15) auf die Grundfläche (8) gelegt werden,
**dadurch gekennzeichnet, dass** die Leuchtflächen (36) im Allgemeinen eine rechteckige Form aufweisen und dadurch, dass die Erscheinungsdauer des Bildes durch den Höhenparameter der Leuchtzone entsprechend der Leuchtflächenabmessung bestimmt ist, die senkrecht zu der durch die zwei Strahlen (22, 24) gebildeten Hauptebene gemessen wird und dadurch, dass das farbige Durchlassband durch den Breitenparameter der Leuchtfläche entsprechend der senkrecht zur Höhe gemessenen Leuchtflächenabmessung bestimmt ist.

2. Verfahren nach Anspruch 1, **dadurch gekennzeichnet, dass** man vor der Lichteinstrahlung die Winkelposition der Einheit aus Grundfläche (8) und Maske (15)um eine zu der genannten Einheit senkrechte Achse (6a) herum einstellt, damit das entsprechende Grundbild für den Betrachter dann sichtbar wird, wenn das Dokument um denselben Winkel gedreht wird.

3. Verfahren nach einem der Ansprüche 1 oder 2, **dadurch gekennzeichnet, dass** der erste Strahl (22) während der nacheinander erfolgenden Bestrahlungen der Grundfläche (8) fest steht und man die Position der Leuchtfläche (36) vor jeder Bestrahlung einstellt.

4. Verfahren nach Anspruch 3, **dadurch gekennzeichnet, dass** man zur Herstellung des zweiten Strahls (24) einen von einem Laser ausgehenden Streustrahl (31) verwendet, eine erste zylindrische und bewegliche Linse (32), die in dem genannten Streustrahl (31) angeordnet ist, eine zweite zylindrische und bewegliche Linse (33), die senkrecht zur erstgenannten Linse (32)und in dem Strahl (34) angeordnet ist, der aus dieser letzteren Linse austritt, sowie ein feststehendes, optisches, holografisches Element (37), das in dem Strahl (35) angeordnet ist, der von der genannten zweiten Linse (33) ausgeht, und wobei jedes Leuchtelement die gesamte Einheit aus Grundlage(8) und Maske (15) beleuchten kann.

5. Verfahren nach einem der Ansprüche 1 - 4, **dadurch gekennzeichnet, dass** die Fensterabschnitte mehrerer Masken (15) überlappend angeordnet sind.

6. Verfahren nach Anspruch 4, **dadurch gekennzeichnet, dass** man die Farbe des Grundbildes dadurch verändert, dass die erste Linse (32) quer versetzt wird.

7. Verfahren nach Anspruch 4, **dadurch gekennzeichnet, dass** man die Farbe des Grundbildes dadurch verändert, dass die erste Linse (32) axial versetzt wird.

8. Verfahren nach Anspruch 4, **dadurch gekennzeichnet, dass** man den Zeitpunkt für das Erscheinen des Grundbildes dadurch bestimmt, dass die zweite Linse (33) quer versetzt wird.

9. Verfahren nach Anspruch 4, **dadurch gekennzeichnet, dass** man den Zeitpunkt für das Erscheinen des Grundbildes dadurch bestimmt, dass die zweite Linse (33) axial versetzt wird.

10. Verfahren zur Herstellung eines Sicherheitselements für die Sicherung eines Dokuments, hergestellt durch Prägen einer Polyesterfolie, die auf der sichtbaren Seite von einer Schicht mit einem das auftreffende Licht brechenden Werkstoff bedeckt ist, und mit Hilfe eines starren Stempels zum Prägen, dessen Abdruck das durch Lichteinstrahlung auf einer photosensiblen Grundlage hergestellte Modell mit einem optisch veränderlichen Bild aus mehreren Grundbildern ergänzt, wobei das genannte Bild (9) mit Hilfe eines ersten, die gesamte Fläche der Grundlage (8) erfassenden Punktstrahls und eines zweiten Lichtstrahls (24) gebildet wird, der von einer Leuchtfläche (36) ausgeht, die einstellbare Abmessungen aufweist und deren Position auf den genannten ersten Strahl (22) eingestellt werden kann, wobei die Lichteinstrahlung der Grundfläche (8) in der Weise erfolgt, dass nacheinander alle Masken (15) auf die Grundfläche (8) gelegt werden, die Leuchtflächen (36) im Allgemeinen eine rechteckige Form aufweisen, und die Erscheinungsdauer des Bildes durch den Höhenparameter der Leuchtzone entsprechend der Leuchtflächenabmessung bestimmt ist, die senkrecht zu der durch die zwei Strahlen (22, 24) gebildeten Hauptfläche gemessen wird, und dadurch, dass das farbige Durchlassband durch den Breitenparameter der Leuchtfläche entsprechend der senkrecht zur Höhe gemessenen Leuchtflächenabmessung bestimmt ist.

11. Sicherheitselement für die Sicherung eines Dokuments, das ein optisch veränderliches Bild mit Hilfe eines Animationseffekts darstellt, der aufgrund von Lichteinstrahlung auf eine photosensible Grundlage (8) durch zwei kohärente Lichtstrahlen (22,24) hergestellt wird, um Bilder zu fertigen, die einen durch eine Farbe und eine Animation bestimmten, optischen Effekt aufweisen, wobei sich das optisch veränderliche Bild aus mindestens 6 prägnanten Grundbildern zusammensetzt, die dem Betrachter, der das Dokument bewegt, einen bestimmten optischen Effekt zeigen, der in einer Farbe besteht, einem farbigen Durchgangsband, einem Erscheinungsmoment und einer Erscheinungsdauer, wenn der Betrachter das gennante Dokument um eine vertikale oder horizontale Achse des Dokuments bewegt, **dadurch gekennzeichnet, dass** die Grundbilder sich aus unrunden Linien zusammensetzen, die nicht alle für den Betrachter gleichzeitig sichtbar sind, und die nacheinander sichtbar werden, wenn der Betrachter eine Schwenkbewegung mit dem Dokument ausführt, so dass Eindruck entsteht, der Durchmesser des Ovals würde kontinuierlich vergrößert oder verkleinert.

## Claims

1. Process for producing an optically variable image (9) broken down into at least six significant elementary images, the image (9) being produced by means of a cache (15) comprising a set of windows defining the areas of the substrate on which the said elementary image must be inscribed, the said image (9) including an animation and acting as a model for the reproduction of a security element (2) on a document by insolation of a photo sensitive substrate (8) using two coherent light beams (22, 24) to form images affected by an optical effect defined by a colour and an animation, the said process consisting of using a first point beam to illuminate the entire surface of the substrate (8) and a second light beam (24) emitted by an illumination surface (36) with adjustable dimensions and a position that can be adjusted with respect to the said first beam (22), insolation of the substrate (8) being achieved by placing each cache (15) in sequence on the substrate (8),
**characterised in that**
the illumination surfaces (36) have a globally rectangular shape, and **in that** the duration of the appearance of the image is fixed by the height parameter of the illumination area corresponding to the dimensions of the illumination surface measured in a plane perpendicular to the general plane defined by the two beams (22, 24) and **in that** the chromatic pass band is fixed by the width parameter of the illumination area corresponding to the dimensions of the illumination surface measured in a direction perpendicular to the height.

2. Process according to claim 1, **characterized in that** the angular position of the assembly formed by the substrate (8) and the cache (15) is adjusted about an axis (6a) perpendicular to the said assembly before insolation, such that the corresponding elementary image is visible to the observer when the document is rotated by the same angle.

3. Process according to any one of claims 1 and 2, **characterised in that** the first beam (22) is fixed during successive insolations of the substrate (8) and **in that** the position of the illumination surface (36) is adjusted before each insolation.

4. Process according to claim 3, **characterized in that** the second beam (24) is generated using a divergent beam (31) output from a laser, a first mobile cylindrical lens (32) located along the line of the said divergent light beam (31), a second mobile cylindrical lens (33) perpendicular to the said first lens (32) and located on the line of the beam (34) output from the said first lens and a fixed holographic optical element (37) located along the line of the beam (35) output from the said second lens (33) and in which each illuminating element could illuminate the entire assembly formed by the substrate (8) and the mask (15).

5. Process according to any one of claims 1 to 4, **characterised in that** portions of the windows of several caches (15) overlap.

6. Process according to claim 4, **characterised in that** the colour of the elementary image is adjusted by moving the first lens (32) transversely.

7. Process according to claim 4, **characterised in that** the colour of the elementary image is adjusted by displacing the first lens (32) axially.

8. Process according to claim 4, **characterised in that** the moment at which the elementary image appears is adjusted by moving the second lens (33) transversely.

9. Process according to claim 4, **characterised in that** the moment at which the elementary image appears is adjusted by moving the second lens (33) axially.

10. Process for manufacturing a security element for increasing the security of a document, obtained by stamping a polyester film covered on its visible face with a layer of material refracting received light, by means of a rigid punch, the impression of which is complementary to the model obtained by insolation of a photo sensitive substrate with an optically variable image formed from several elementary images, the said image (9) being formed by means of a first point beam capable of illuminating the entire surface of the substrate (8) and a second light beam (24) emitted by an illumination surface (36) with adjustable dimensions and a position that can be adjusted with respect to the said first beam (22), the substrate (8) being insolated by placing each cache (15) in sequence on the substrate (8), the illumination surfaces (36) have a globally rectangular shape, and in that the duration of appearance of the image is fixed by the height parameter of the illumination area corresponding to the dimension of the illumination surface measured in a plane perpendicular to the general plane defined by the two beams (22, 24), and in that the chromatic pass band is fixed by the width parameter of the illumination area corresponding to the dimension of the illumination surface measured in a direction perpendicular to the height.

11. Security element for making a document secure, forming an optically variable image by an animation effect, made by insolation of a photo sensitive substrate (8) using two coherent light beams (22, 24) to form images affected by an optical effect, defined by a colour and an animation, the said optically variable image being broken down into at least six significant elementary images affected by a given optical effect is assigned, the said optical effect for the observer tilting the said document being defined by a colour, a chromatic pass band, an appearance start time and duration when the operator tilts the said document about a vertical or horizontal axis of the document, **characterised in that** the elementary images are composed of oval lines that are not all visible by the observer at the same time, and that are visible in sequence when the operator tilts the document to give the impression that the diameter of the oval increases or reduces continuously.
